# EUROPEAN PATENT APPLICATION

(11) **EP 4 572 190 A1**
(43) Date of publication of application: **18.06.2025**
(21) Application number: 23881709.2
(22) Date of filing: 18.10.2023
(51) Int. Cl.: H04L 1/00

(54) **ENERGY COLLECTION CONTROL METHOD AND APPARATUS**

(30) Priority: 25.10.2022 CN 202211309708
(71) Applicant: Huawei Technologies Co., Ltd., Shenzhen, Guangdong 518129 (CN)
(72) Inventor: LIANG, Fangli, Shenzhen, Guangdong 518129 (CN); XIE, Zichen, Shenzhen, Guangdong 518129 (CN); LI, Weihua, Shenzhen, Guangdong 518129 (CN); TIAN, Jun, Shenzhen, Guangdong 518129 (CN)
(74) Representative: Körber, Martin Hans
(86) International application number: PCT/CN2023/125199
(87) International publication number: WO 2024/088131

(57) **Abstract**

Embodiments of this application provide a method and an apparatus for controlling energy harvesting. The method includes: A control layer determines that there is a to-be-transmitted data packet in a current data queue, and the control layer obtains a first energy value from a physical layer, where the first energy value is an energy value of a first component at the physical layer. The control layer determines, based on the first energy value, to enable energy harvesting or disable the energy harvesting, and further indicates, by using a first identifier in a frame header of a first data packet, the physical layer to enable the energy harvesting or disable the energy harvesting. When determining that there is to-be-transmitted data, the control layer further determines to enable or disable the energy harvesting. This avoids slot allocation for the energy harvesting still performed when no data is transmitted, and a slot occupied by the energy harvesting and a slot occupied by data transmission may be dynamically adjusted.

## Description

This application claims priority to Chinese Patent Application No. 202211309708.6, filed with the China National Intellectual Property Administration on October 25, 2022 and entitled "METHOD AND APPARATUS FOR CONTROLLING ENERGY HARVESTING", which is incorporated herein by reference in its entirety.

### TECHNICAL FIELD

This application relates to the communication field, and more specifically, to a method and an apparatus for controlling energy harvesting.

### BACKGROUND

Currently, in an environment in which an electronic device is located, there is much energy that can be harvested. For example, monotonous harvesting may be performed on radio frequency energy, light energy, kinetic energy, thermal energy, and magnetic field energy, or composite harvesting and efficient conversion may be performed on temperature difference energy, wind energy, chemical energy, and the like. A power management module of the electronic device may preferentially use harvested energy, to continuously optimize energy consumption and prolong a service life of a battery. In some special cases, the power management module may use only the harvested energy, that is, the power management module can completely get rid of dependence on the battery. However, energy harvesting is often applied to a wireless sensor to resolve disadvantages such as a difficulty in battery replacement for a wireless sensor node and a limited battery life.

In a conventional technology, for harvested energy, an optimal value of energy consumption in each slot needs to be estimated, and then the harvested energy is allocated based on the estimated optimal value. When no information needs to be sent in a current slot, the energy consumption in each slot usually needs to be estimated, leading to resource waste. Particularly, when a surrounding environment changes, the optimal value of the energy consumption in each slot obtained through estimation may be not accurate enough, resulting in inaccurate energy allocation.

Therefore, a method for controlling energy harvesting is urgently needed to resolve an adaptability problem of the energy harvesting.

### SUMMARY

This application provides a method and an apparatus for controlling energy harvesting, to flexibly adjust slots occupied by data transmission and energy harvesting. This improves efficiency and adaptability of the energy harvesting, and avoids resource waste.

According to a first aspect, a method for controlling energy harvesting is provided. The method may be performed by a sending device or a receiving device, or may be performed by a chip or a circuit used for the sending device or the receiving device. This is not limited in this application. For ease of description, the following uses an example in which the sending device performs the method for description.

The method includes:
generating a first data packet, where the first data packet is a to-be-transmitted data packet, a frame header of the first data packet includes a first identifier, and the first identifier indicates a physical layer to enable energy harvesting or disable the energy harvesting; and sending the first data packet.

It should be understood that the first data packet may be sent by using a higher layer in a non-network structure, a higher layer in a network structure, or another device, or may be to-be-sent data stored in a current data queue. This is not specifically limited in this application.

According to the solution provided in this application, the first data packet is sent, and the physical layer is further indicated, based on the first identifier in the frame header of the first data packet, to enable the energy harvesting or disable the energy harvesting. Compared with a conventional method in which a sending device separately sends control signaling to indicate a receiving device to enable energy harvesting or disable the energy harvesting, the method uses the first identifier that is present in transmission of the first data packet, without a need of control signaling exchange. In addition, enabling or disabling of the energy harvesting can be dynamically adjusted in real time, improving adaptability of the energy harvesting.

With reference to the first aspect, in some implementations of the first aspect, the method further includes: obtaining a first energy value, where the first energy value is an energy value of a first component; and determining the first identifier based on the first energy value.

Based on the foregoing solution, the first energy value is obtained, and whether to enable the energy harvesting or disable the energy harvesting is determined based on the first energy value. This may be determined based on a predefined threshold or a value determined through information exchange. This is not specifically limited in this application. Whether to enable the energy harvesting or disable the energy harvesting is further determined by determining the first energy value, so that the energy harvesting can be arranged more efficiently and appropriately, to further effectively schedule the energy harvesting.

With reference to the first aspect, in some implementations of the first aspect, when the first energy value is greater than a first threshold, the first identifier indicates the physical layer to disable the energy harvesting; or when the first energy value is less than or equal to the first threshold, the first identifier indicates the physical layer to enable energy harvesting.

With reference to the first aspect, in some implementations of the first aspect, when the first identifier indicates the physical layer to enable the energy harvesting, the first data packet includes a first field and a second field, where the first field indicates a start moment of the energy harvesting, and the second field indicates duration of the energy harvesting or an end moment of the energy harvesting.

With reference to the first aspect, in some implementations of the first aspect, a length of the first data packet is a sum of a quantity of bytes occupied by the first data packet and a first quantity of bytes, and the first quantity of bytes is a quantity of bytes occupied by the first field and the second field.

Based on the foregoing solution, when the first identifier indicates the physical layer to enable the energy harvesting, the sent first data packet includes the first field and the second field, that is, the length of the first data packet includes the quantity of bytes occupied by the first data packet, and the quantity of bytes occupied by the first field and the second field. The physical layer may appropriately configure and effectively adjust the first field and the second field based on a time consumed by the first data packet.

According to a second aspect, a method for controlling energy harvesting is provided. The method may be performed by a sending device or a receiving device, or may be performed by a chip or a circuit used for the sending device or the receiving device. This is not limited in this application. For ease of description, the following uses an example in which the receiving device performs the method for description.

The method includes: receiving a first data packet, where the first data packet is a to-be-transmitted data packet, a frame header of the first data packet includes a first identifier, and the first identifier indicates a physical layer to enable energy harvesting or disable the energy harvesting; and enabling the energy harvesting or disabling the energy harvesting based on the first identifier.

According to the solution provided in this application, the first data packet is received, and the physical layer is indicated, based on the first identifier in the frame header of the first data packet, to enable the energy harvesting or disable the energy harvesting. Compared with a conventional method in which a sending device separately sends control signaling to indicate a receiving device to enable energy harvesting or disable the energy harvesting, the method uses the first identifier that is present in transmission of the first data packet, without a need of control signaling exchange. In addition, enabling or disabling of the energy harvesting can be dynamically adjusted in real time, improving adaptability of the energy harvesting.

With reference to the second aspect, in some implementations of the second aspect, the method further includes: sending a first energy value, where the first energy value is an energy value of a first component, and the first energy value is used to determine the first identifier.

With reference to the second aspect, in some implementations of the second aspect, when the first identifier indicates the physical layer to enable the energy harvesting, the sent first data packet includes a first field and a second field, where the first field indicates a start moment of the energy harvesting, and the second field indicates duration of the energy harvesting or an end moment of the energy harvesting.

With reference to the second aspect, in some implementations of the second aspect, a length of the first data packet is a sum of a quantity of bytes occupied by the first data packet and a first quantity of bytes, and the first quantity of bytes is a quantity of bytes occupied by the first field and the second field.

With reference to the second aspect, in some implementations of the second aspect, first switching or second switching or both are performed based on the first identifier, the first field, and the second field, where the first switching means that the physical layer switches from a data transmission mode to an energy harvesting mode, the second switching means that the physical layer switches from the energy harvesting mode to the data transmission mode, the data transmission mode means that the physical layer transmits the first data packet, and the energy harvesting mode means that the physical layer harvests energy.

According to a third aspect, a method for controlling energy harvesting is provided. The method may be performed by a sending device or a receiving device, or may be performed by a chip or a circuit used for the sending device or the receiving device. This is not limited in this application. For ease of description, the following uses an example in which the sending device performs the method for description.

The method includes:
receiving a first data packet, where the first data packet is a to-be-transmitted data packet, a frame header of the first data packet includes a first identifier, and the first identifier indicates a physical layer to enable energy harvesting or disable the energy harvesting; and enabling the energy harvesting or disabling the energy harvesting based on the first identifier.

With reference to the third aspect, in some implementations of the third aspect, first information is sent, where the first information is used to determine the first identifier, the first information is related to a first energy value, and the first energy value is an energy value of a first component.

With reference to the third aspect, in some implementations of the third aspect, when the first identifier indicates the physical layer to enable the energy harvesting, the first data packet includes a first field and a second field, where the first field indicates a start moment of the energy harvesting, and the second field indicates duration of the energy harvesting or an end moment of the energy harvesting.

With reference to the third aspect, in some implementations of the third aspect, a length of the first data packet is a sum of a quantity of bytes occupied by the first data packet and a first quantity of bytes, and the first quantity of bytes is a quantity of bytes occupied by the first field and the second field.

With reference to the third aspect, in some implementations of the third aspect, first switching or second switching or both are performed based on the first identifier, the first field, and the second field, where the first switching means that the physical layer switches from a data transmission mode to an energy harvesting mode, the second switching means that the physical layer switches from the energy harvesting mode to the data transmission mode, the data transmission mode means that the physical layer transmits the first data packet, and the energy harvesting mode means that the physical layer harvests energy.

According to a fourth aspect, a method for controlling energy harvesting is provided. The method may be performed by a sending device or a receiving device, or may be performed by a chip or a circuit used for the sending device or the receiving device. This is not limited in this application. For ease of description, the following uses an example in which the receiving device performs the method for description.

The method includes:
receiving first information, where the first information is used to determine a first identifier, the first information is related to a first energy value, and the first energy value is an energy value of a first component; and sending a first data packet, where the first data packet is a to-be-transmitted data packet, a frame header of the first data packet includes a first identifier, the first identifier indicates a physical layer to enable energy harvesting or disable the energy harvesting; and the first identifier is determined based on the first information.

With reference to the fourth aspect, in some implementations of the fourth aspect, when the first identifier indicates the physical layer to enable the energy harvesting, a length of the first data packet includes a first field and a second field, where the first field indicates a start moment of the energy harvesting, and the second field indicates duration of the energy harvesting.

With reference to the fourth aspect, in some implementations of the fourth aspect, a length of the first data packet is a sum of a quantity of bytes occupied by the first data packet and a first quantity of bytes, and the first quantity of bytes is a quantity of bytes occupied by the first field and the second field.

According to a fifth aspect, an apparatus for controlling energy harvesting is provided, including:
a processing unit, configured to generate a first data packet, where the first data packet is a to-be-transmitted data packet; and a transceiver unit, configured to send the first data packet, where a frame header of the first data packet includes a first identifier, and the first identifier indicates a physical layer to enable energy harvesting or disable the energy harvesting.

The transceiver unit may perform receiving and sending in the first aspect, and the processing unit may perform processing other than receiving and sending in the first aspect.

According to a sixth aspect, an apparatus for controlling energy harvesting is provided, including:
a transceiver unit, configured to receive a first data packet, where the first data packet is a to-be-transmitted data packet, a frame header of the first data packet includes a first identifier, and the first identifier indicates a physical layer to enable energy harvesting or disable the energy harvesting; and a processing unit, configured to enable the energy harvesting or disable the energy harvesting based on the first identifier.

The transceiver unit may perform receiving and sending in the second aspect, and the processing unit may perform processing other than receiving and sending in the second aspect.

According to a seventh aspect, an apparatus for controlling energy harvesting is provided, including:
a transceiver unit, configured to receive a first data packet, where the first data packet is a to-be-transmitted data packet, a frame header of the first data packet includes a first identifier, and the first identifier indicates a physical layer to enable energy harvesting or disable the energy harvesting; and a processing unit, configured to enable the energy harvesting or disable the energy harvesting based on the first identifier.

The transceiver unit may perform receiving and sending in the third aspect, and the processing unit may perform processing other than receiving and sending in the third aspect.

According to an eighth aspect, an apparatus for controlling energy harvesting is provided, including:
a transceiver unit, configured to receive first information, where the first information is used to determine whether to enable the energy harvesting or disable the energy harvesting, the first information is related to a first energy value, and the first energy value is an energy value of a first component; and the transceiver unit is further configured to send a first data packet, where the first data packet is a to-be-transmitted data packet, a frame header of the first data packet includes a first identifier, the first identifier indicates a physical layer to enable energy harvesting or disable the energy harvesting, and the first identifier is determined based on the first information.

The transceiver unit may perform receiving and sending in the fourth aspect, and the processing unit may perform processing other than receiving and sending in the fourth aspect.

According to a ninth aspect, an apparatus for controlling energy harvesting is provided, including a processor and a memory. Optionally, the apparatus may further include a transceiver. The memory is configured to store a computer program, and the processor is configured to: invoke and run the computer program stored in the memory, and control the transceiver to receive and send a signal, to enable an angle measurement apparatus to perform the method according to any possible implementation of the first aspect to the fourth aspect.

According to a tenth aspect, an apparatus for controlling energy harvesting is provided, includes a processor and a communication interface. The communication interface is configured to: receive data and/or information, and transmit the received data and/or information to the processor. The processor processes the data and/or information. The communication interface is further configured to output the data or information or both that are processed by the processor, to enable the method according to any possible implementation of the first aspect to the fourth aspect to be performed.

According to an eleventh aspect, a computer-readable storage medium is provided. The computer-readable storage medium stores computer instructions, and when the computer instructions are run on a computer, the method according to any possible implementation of the first aspect to the fourth aspect is performed.

According to a twelfth aspect, a computer program product is provided. The computer program product includes computer program code, and when the computer program code is run on a computer, the method according to any possible implementation of the first aspect to the fourth aspect is performed.

According to a thirteenth aspect, a communication system is provided, including the sending device and the receiving device.

### BRIEF DESCRIPTION OF DRAWINGS

FIG. 1 is a diagram of a structure of an energy harvesting device according to this application;
FIG. 2 is a schematic flowchart of a method for controlling energy harvesting according to an embodiment of this application;
FIG. 3 is a diagram of another method for controlling energy harvesting according to an embodiment of this application;
FIG. 4 is a schematic flowchart of a method 400 for controlling energy harvesting according to an embodiment of this application;
FIG. 5 is a schematic flowchart of a method 500 for controlling energy harvesting according to an embodiment of this application;
FIG. 6 is a schematic flowchart of another method for controlling energy harvesting according to an embodiment of this application;
FIG. 7 is a schematic flowchart of another method for controlling energy harvesting according to an embodiment of this application;
FIG. 8 is a diagram of a structure of an apparatus for controlling energy harvesting according to an embodiment of this application; and
FIG. 9 is a diagram of a structure of another apparatus for controlling energy harvesting according to an embodiment of this application.

### DESCRIPTION OF EMBODIMENTS

The following describes technical solutions of this application with reference to accompanying drawings.

The technical solutions of this application may be applied to a wireless personal area network (wireless personal area network, WPAN). Currently, a standard used for the WPAN is the institute of electrical and electronics engineers (institute of electrical and electronics engineers, IEEE) 802.15 series. The WPAN may be used for communication between digital auxiliary devices in a small range, such as a telephone, a computer, and an auxiliary device. Technologies that support the wireless personal area network include Bluetooth (Bluetooth), ZigBee (ZigBee), ultra wideband (ultra wideband, UWB), an infrared data association (infrared data association, IrDA) connection technology, and home radio frequency (home radio frequency, HomeRF), and the like. From a perspective of network composition, the WPAN is located at a bottom layer of an entire network architecture and is used for a wireless connection between devices in a small range, that is, a point-to-point short-distance connection. The WPAN may be considered as a short-distance wireless communication network. Based on different application scenarios, WPANs are further classified into high rate (high rate, HR)-WPANs and low rate (low rate, LR)-WPANs. The HR-WPAN may be used to support various high-rate multimedia applications, including high-quality audio and video delivery, multi-megabyte music and image document transmission, and the like. The LR-WPAN may be used for common services in daily life.

In the WPAN, devices may be classified into full-function devices (full-function devices, FFDs) and reduced-function devices (reduced-function devices, RFDs) based on communication capabilities of the devices. The FFDs can communicate with each other and an FFD can communicate with an RFD. The RFDs cannot directly communicate with each other. An RFD can communicate only with an FFD or forward data through one FFD. An FFD associated with an RFD is referred to as a coordinator (coordinator) of the RFD. The RFD is mainly used for simple control application, for example, a light switch and a passive infrared sensor. A small amount of data is transmitted, and small quantities of transmission resources and communication resources are occupied. Therefore, costs of the RFD are low. The coordinator may also be referred to as a personal area network (personal area network, PAN) coordinator, a central control node, or the like. The PAN coordinator is a main control node of an entire network, and each ad hoc network can have only one PAN coordinator, which has functions of member identity management, link information management, and packet forwarding.

Optionally, a device (for example, a sending device or a receiving device) in embodiments of this application may be a device supporting the 802.15 series, for example, a device supporting a plurality of WPAN standards such as 802.15.4a, 802.15.4z, a WPAN standard under discussion, or a WPAN standard in a subsequent version.

In embodiments of this application, the device may be a communication server, a router, a switch, a bridge, a computer, a mobile phone, a home smart device, a vehicle-mounted communication device, or the like.

In embodiments of this application, the device may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user equipment (user equipment, UE) of various forms, a mobile station (mobile station, MS), a terminal (terminal), terminal equipment (terminal equipment), a portable communication device, a handheld device, a portable computing device, an entertainment device, a game device or system, a global positioning system device, any other suitable device configured to perform network communication via a wireless medium, and the like. In addition, the device supports the 802.15.4ab standard or a next-generation standard of the 802.15.4ab. The device further supports a plurality of standards, such as the 802.15.4a, 802.15.4-2011, 802.15.4-2015, and 802.15.4z. The device may further support a plurality of wireless local area network (wireless local area network, WLAN) standards of the 802.11 family, for example, the 802.11ax, 802.11ac, 802.11n, 802.11g, 802.11b, 802.11a, and a next generation of the 802.11be.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that can invoke and execute the program in the FFD or the RFD.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage device (for example, a hard disk, a floppy disk or a magnetic tape), an optical disc (for example, a compact disc (compact disc, CD), or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data.

The technical solutions of this application are further applicable to a wireless local area network system, for example, an internet of things (internet of things, IoT) network or a vehicle-to-everything (Vehicle to X, V2X) network. It is clear that embodiments of this application may be further applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

It should be understood that the technical solutions provided in this application are further applicable to a Bluetooth indoor positioning system. The Bluetooth indoor positioning system may be applied to an indoor navigation device. For example, a Bluetooth band is used as a navigation terminal to effectively resolve a problem that a blind person cannot quickly, safely, and conveniently reach a target place from a current location during an indoor activity, especially a travel problem in a public place, for example, a hospital, a subway station, or a shopping mall.

For ease of understanding embodiments of this application, the following points are described.

First, in this application, unless otherwise stated or there is a logic conflict, terms and/or descriptions between different embodiments are consistent and may be mutually referenced, and technical features in different embodiments may be combined into a new embodiment based on an internal logical relationship thereof.

Second, in this application, "at least one" means one or more, and "a plurality of" means two or more. The term "and/or" describes an association relationship between associated objects, and represents that three relationships may exist. For example, A and/or B may represent the following cases: A exists alone, both A and B exist, and B exists alone, where A and B may be singular or plural. In the descriptions of this application, the character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, and c may indicate a, b, c, a and b, a and c, b and c, or a, b, and c. Each of a, b, and c may be in a singular form or a plural form.

Third, in this application, "first", "second", and various numbers (for example, #1 and #2) are merely used for distinguishing for ease of description and are not intended to limit the scope of embodiments of this application, for example, are used for distinguishing different messages, rather than describing a specific order or sequence. It should be understood that objects described in such a way are interchangeable in an appropriate circumstance, so that a solution other than embodiments of this application can be described.

Fourth, in this application, descriptions such as "when ...", "in a case of ...", and "if" all mean that a device performs corresponding processing in a specific objective situation, and are not intended to limit time. The descriptions do not mean that the device is required to have a determining action during implementation, and do not mean any other limitation.

Fifth, the terms "include", "contain" and any other variants thereof in this application are intended to cover non-exclusive inclusion. For example, a process, method, system, product, or device that includes a series of steps or units is not limited to those clearly listed steps or units, but may include other steps or units that are not explicitly listed or are inherent to such a process, method, system, product, or device.

Sixth, in this application, the "protocol" may mean a standard protocol in the communication field, for example, may include a 5G protocol, a Bluetooth protocol, and a related protocol applied to a future communication system. This is not limited in this application.

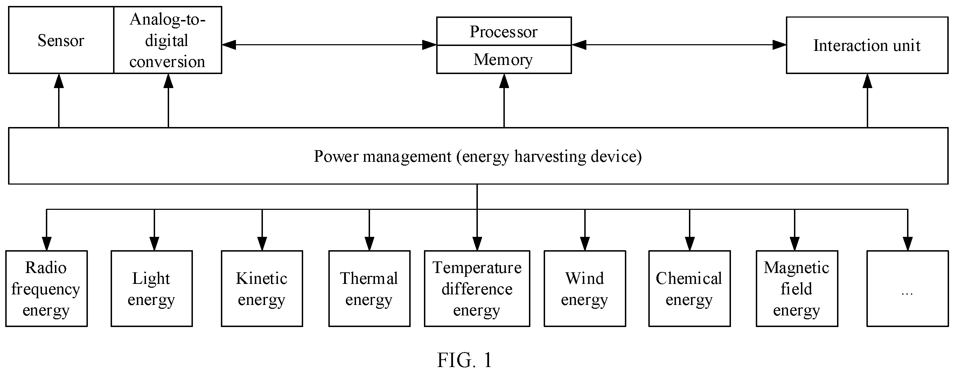

FIG. 1 is a diagram of a structure of an energy harvesting device according to this application.

In an environment in which an electronic device is located, there is much energy that can be harvested. As shown in FIG. 1, power management (or may be referred to as an energy harvesting device) in the electronic device harvests energy such as radio frequency energy, light energy, kinetic energy, thermal energy, temperature difference energy, wind energy, chemical energy, and magnetic field energy, so that units such as an interaction unit, a processor, a memory, and a sensor in the electronic device preferentially use the harvested energy. This can continuously optimize energy consumption and prolong a battery life.

In an example, energy harvesting is often applied to a wireless sensor to resolve disadvantages such as a difficulty in battery replacement for a sensor node, and a limited battery life.

It should be understood that, in some cases, the electronic device can be completely independent of the battery through the energy harvesting, and use only the harvested energy.

Due to the energy harvesting, the electronic device has advantages, such as continuously optimizing the energy consumption, prolonging the battery life, or getting rid of independence on the battery.

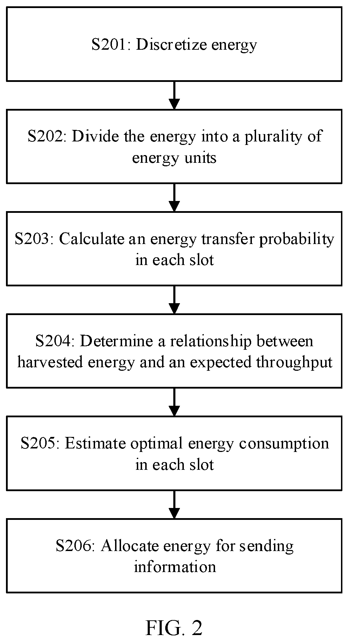

FIG. 2 is a schematic flowchart of a method for controlling energy harvesting according to an embodiment of this application.

In the method for controlling energy harvesting shown in FIG. 2, energy is first discretized, and is divided into a plurality of energy units, and an energy transfer probability in each slot is further calculated. After a relationship between harvested energy and an expected throughput is determined, optimal energy consumption in each slot is estimated, and energy for sending information is allocated to each slot.

In the method for controlling energy harvesting shown in FIG. 2, even if no information needs to be sent in a current slot, energy consumption in each slot needs to be estimated, leading to resource waste. In addition, if a surrounding environment changes, relatively large errors may exist in the calculated energy transfer probability in each slot and estimated energy consumption in each slot as shown in FIG. 2, which leads to an inaccurate estimation result.

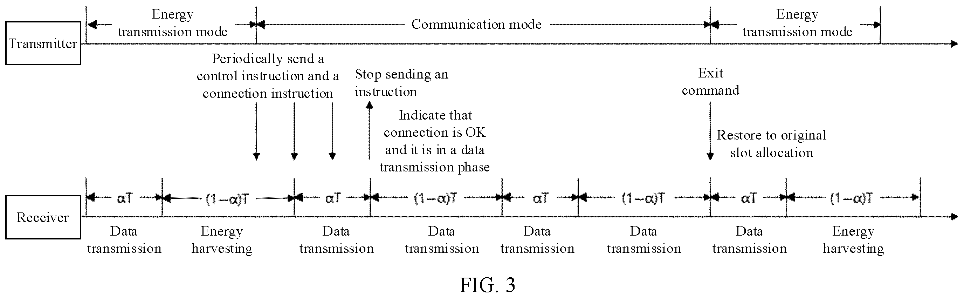

FIG. 3 is a diagram of another method for controlling energy harvesting according to an embodiment of this application. In the method shown in FIG. 3, a slot switching method for energy harvesting is mainly: dividing a time interval T into a data transmission time period αT and an energy harvesting time period (1-α)T, completing mutual switching between an energy transmission mode and a communication mode by periodically sending and receiving a related instruction, and completing data transmission and the energy harvesting separately within an agreed time period.

In the method shown in FIG. 3, a transmitter and a receiver can notify each other of a current operating model (the energy transmission mode or the communication mode) only through signaling exchange. Slots are allocated based on a fixed percentage during data transmission and the energy harvesting. When transmitted data is large, or when a large amount of data is transmitted, the energy harvesting slots cannot be scheduled for a long time.

It should be understood that in this embodiment of this application, the energy transmission mode is similar to an energy harvesting mode, and the communication mode is similar to a data transmission mode, which may be interchangeable.

According to the methods for controlling energy harvesting shown in FIG. 2 and FIG. 3, it is found that the foregoing methods for controlling energy harvesting are not highly adaptable, and energy harvesting efficiency is relatively low.

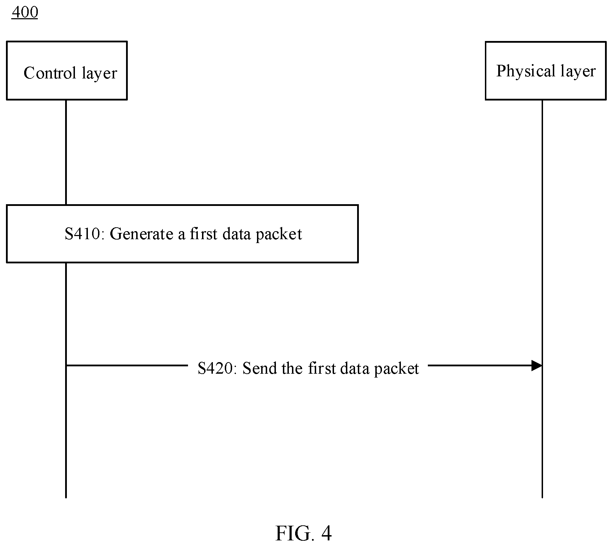

Based on the foregoing existing problems, the following uses a Bluetooth device scenario as an example to describe in detail the technical solutions provided in this application with reference to FIG. 4 to FIG. 7.

FIG. 4 is a schematic flowchart of a method 400 for controlling energy harvesting according to an embodiment of this application. The method for controlling energy harvesting shown in FIG. 4 is mainly described from a perspective of a control layer and a physical layer. The control layer and the physical layer may perform the method in a sending device (for example, a transmitter), or may perform the method in a receiving device (for example, a receiver). This is not specifically limited in this application.

As shown in FIG. 4, the method includes the following steps.

S410: The control layer generates a first data packet.

The control layer generates the first data. The first data packet is a to-be-transmitted data packet.

It should be understood that the control layer determines the first data packet that is stored in a current to-be-transmitted data queue. The first data packet may be a data packet sent by a higher layer in a network protocol or another device to the control layer, or a data packet generated by the control layer. This is not specifically limited in this application.

S420: The control layer sends the first data packet to a physical layer.

Correspondingly, the physical layer receives the first data packet sent by the control layer.

Specifically, when the control layer determines that there is the first data packet in the to-be-transmitted data queue, the control layer sends the first data packet to the physical layer, where a frame header of the first data packet includes a first identifier, and the first identifier indicates a physical layer to enable energy harvesting or disable the energy harvesting.

In a possible implementation, a reserved bit in a frame header of a Bluetooth low energy (Bluetooth low energy, BLE) base frame is allocated to energy harvesting for use. For example, a 1-bit reserved for future usage (reserved for future usage, RFU) field is modified to a 1-bit energy harvesting (energy harvesting, EH) flag field. In this case, the first identifier may be an EH identifier.

Optionally, when the first identifier indicates the physical layer to enable the energy harvesting, the first data packet sent by the control layer may further include a first field and a second field, where the first field indicates a start moment of the energy harvesting, and the second field indicates duration of the energy harvesting or an end moment of the energy harvesting.

It should be understood that the first field may further indicate duration from a start moment of scheduling (or referred to as transmission) of the first data packet to a start moment of the energy harvesting; and the second field may further indicate duration from the start moment of the energy harvesting to an end moment of the energy harvesting, or directly indicate the end moment of the energy harvesting.

For example, when the first identifier is the EH identifier, assuming that EH=1, the EH identifier indicates the physical layer to enable the energy harvesting, and the first field and the second field are added after the frame header of the BLE base frame. The first field may also be referred to as a time offset (offset) field, and the second field may also be referred to as a duration (duration) field. Table 1 shows a frame structure for transmitting the first data packet.

**Table 1**

| | | | | | | | | | |
|---|---|---|---|---|---|---|---|---|---|
| Preamble | Synchronization sequence | Control Information | Energy harvesting EH flag | Length of first data | First field (time offset) | Second field (duration) | Payload | Integrity check | Cyclic redundancy check |

As shown in Table 1, a 4-bit first field and a 4-bit second field may be added after the frame header of the BLE base frame.

It should be understood that a length of the first data packet sent by the control layer is a sum of a quantity of bytes occupied by the first data packet and a first quantity of bytes, that is, the first quantity of bytes is a quantity of bytes occupied by the first field and the second field.

Based on the method shown in FIG. 4, the control layer sends the to-be-transmitted first data packet to the physical layer, where a reserved bit in a frame structure of the first data packet includes the first identifier, and the first identifier indicates the physical layer to enable energy harvesting or disable the energy harvesting. The energy harvesting identifier is added to a frame header of a data frame, to further control data transmission and the energy harvesting. This can effectively control the energy harvesting to be enabled and disabled at any time without affecting normal data transmission, improving adaptability of the energy harvesting. Compared with the methods shown in FIG. 2 and FIG. 3, this method needs to neither estimate energy consumption in each slot, nor notify each other of an operating mode through complex signaling exchange, can flexibly adjust data transmission and the energy harvesting at the physical layer, and further improves efficiency of the energy harvesting.

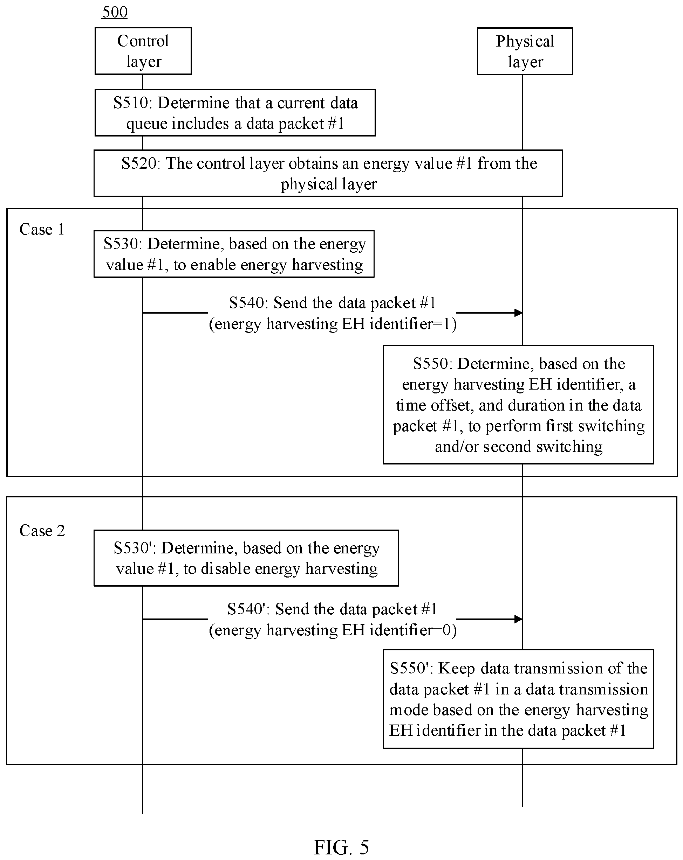

FIG. 5 is a schematic flowchart of a method 500 for controlling energy harvesting according to an embodiment of this application.

S510: A control layer determines that a current data queue includes a data packet #1.

The data packet #1 is a to-be-transmitted data packet. The data packet #1 is a to-be-sent data packet stored in a current to-be-transmitted data queue of the control layer.

S520: The control layer obtains an energy value #1 from a physical layer.

Specifically, after the control layer determines that the current data queue includes the data packet #1, the control layer obtains the energy value #1 from the physical layer.

It should be understood that the energy value #1 is an energy value of a first component at the physical layer or a measurement value (for example, a power value or a voltage value) obtained through energy conversion. The first component may be a value of energy stored in a register at the physical layer, or a current value of energy stored in an energy harvesting device at the physical layer. This is not specifically limited in this application.

It should be further understood that, after obtaining the energy value #1 from the physical layer, the control layer determines, based on the energy value #1, whether to enable the energy harvesting or disable the energy harvesting. There are the following two cases:

### Case 1

The control layer determines, by using the energy value #1, to enable the energy harvesting, as shown in the method in FIG. 5. The method further includes the following steps.

S530: The control layer determines, based on the energy value #1, to enable the energy harvesting.

Specifically, the control layer obtains the energy value #1 from the physical layer, and determines, based on the energy value #1, that the energy harvesting needs to be enabled.

In a possible implementation, the control layer determines, by using the energy value #1 and a first threshold, that the energy harvesting needs to be enabled.

In an example, when the control layer determines that the obtained energy value #1 is greater than the first threshold, the control layer determines to enable the energy harvesting. The first threshold may be predefined, or determined through signaling exchange. This is not specifically limited in this application.

For example, when the energy value #1 is 6 and the first threshold is 5, the energy value #1 is greater than the first threshold, and the control layer determines to enable the energy harvesting.

S540: The control layer sends the data packet #1 to the physical layer.

Correspondingly, the physical layer receives the data packet #1 from the control layer.

It should be understood that the control layer determines, based on the energy value #1, to enable the energy harvesting, and sends the data packet #1 to the physical layer at an event scheduling moment. A value 1 is assigned to an EH identifier field in a frame header of the data packet #1.

In a possible implementation, when EH=1, the control layer may further need to determine duration (Tx_Time) occupied by currently sending the first data packet, duration (Rx_Time) occupied by receiving a physical layer acknowledgment packet, and a reserved interval (T_IFS) for receive-transmit switching. The control layer further determines a value of a time offset field in the frame header of the data packet #1 based on the determined duration and the determined interval.

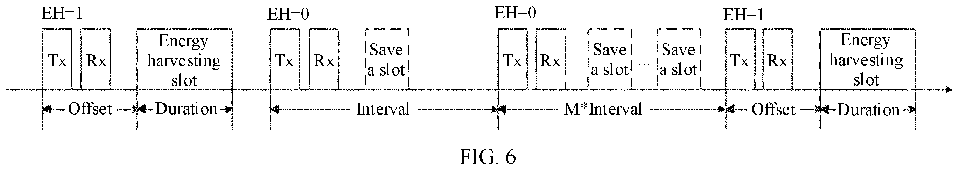

For example, as shown in FIG. 6, a time value aligned with a value that is slightly greater than an entire slot of Tx_Time+T_IFS+Rx_Time+T_IFS is assigned to the time offset (offset) field. The value of the time offset field may change with duration occupied by data transmission, and is not a fixed value.

In another possible implementation, when EH=1, a value assigned to a duration field may be determined based on the first threshold and the energy value #1.

For example, when a difference between the first threshold and the energy value #1 is represented as Diff, a time value that is slightly greater than Diff*2 slots may be assigned to the duration field. The value assigned to the duration field may change based on a value of Diff.

It should be further understood that, when the control layer determines that the energy harvesting needs to be enabled, a length of the data packet #1 sent by the control layer is a quantity of bytes occupied by the first data packet and a quantity of bytes occupied by the time offset field and the duration field.

In a possible implementation, a value of the length of the sent data packet #1 is a value of the quantity of bytes occupied by the first data packet plus 1. In other words, the time offset field and the duration field occupy one byte.

To be specific, the EH identifier field and the time offset field in the frame header of the sent data packet #1, the duration field, and the data length are all assigned values, and another field of the data packet #1 is assigned with a value in an original BLE assignment manner. This is not limited in this application.

It should be noted that the data packet #1 sent by the control layer to the physical layer includes a basic data frame for controlling a slot occupied by data transmission and a slot occupied by the energy harvesting, and the physical layer executes corresponding data transmission and energy harvesting based on the received data packet #1.

S550: Determine, based on the energy harvesting EH identifier, the time offset field, and the duration field in the data packet #1, to perform first switching and/or second switching.

Specifically, after receiving the data packet #1, the physical layer determines, based on the EH identifier, the time offset field, and the duration field in the data packet #1, to perform first switching and/or the second switching.

The first switching means that the physical layer switches from a data transmission mode to an energy harvesting mode, and the second switching means that the physical layer switches from the energy harvesting mode to the data transmission mode.

It should be understood that the data transmission mode means completing transmission of one or more data packets in an allocated data transmission slot.

It should be understood that the energy harvesting mode means completing a single continuous energy harvesting in an allocated energy harvesting slot.

In a possible implementation, when the event scheduling moment and duration of a time offset is reached, the physical layer immediately performs first switching, switching from the data transmission mode to the energy harvesting mode, and starts the energy harvesting.

For example, after current data transmission ends, a frequency is disabled. The frequency does not need to be switched, data stored in a memory does not need to be operated, and power-on configuration and conversion configuration of an energy storage unit are enabled.

In another possible implementation, when a duration sum of the event scheduling moment, a time offset, and duration is reached, the physical layer immediately stops the energy harvesting, and switches from the energy harvesting mode to the data transmission mode, to further prepare for subsequent data transmission.

For example, after the current energy harvesting ends, the power-off configuration of the energy storage unit is enabled, frequency is enabled, the frequency may be switches, and a read/write operation on the memory is allowed.

Based on the time offset field and the duration field in the received data packet #1, the physical layer switches from the data transmission mode to the energy harvesting mode, or switches from the energy harvesting mode to the data transmission mode. The physical layer can flexibly adjust the energy harvesting and data transmission based on the fields in the received data packet #1, improving adaptability of the method.

### Case 2

The control layer determines, by using the energy value #1, to disable the energy harvesting, as shown in the method in FIG. 5. The method further includes the following steps.

S530': Determine, based on the energy value #1, to disable the energy harvesting.

Specifically, the control layer obtains the energy value #1 from the physical layer, and determines, based on the energy value #1, that the energy harvesting needs to be disabled.

In a possible implementation, the control layer determines, by using the energy value #1 and a first threshold, that the energy harvesting needs to be disabled.

In an example, when the control layer determines that the obtained energy value #1 is less than or equal to the first threshold, the control layer determines to disable the energy harvesting.

For example, when the energy value #1 is 5 and the first threshold is 5, the energy value #1 is equal to the first threshold, and the control layer determines to disable the energy harvesting; when the energy value #1 is 5 and the first threshold is 6, the energy value #1 is less than the first threshold, and the control layer determines to disable the energy harvesting.

S540': The control layer sends the data packet #1 to the physical layer.

Correspondingly, the physical layer receives the data packet #1 from the control layer.

It should be understood that the control layer determines, based on the energy value #1, to disable the energy harvesting, and sends the data packet #1 to the physical layer at an event scheduling moment. A value 0 is assigned to an EH identifier field in a frame header of the data packet #1.

It should be further understood that, when the control layer determines to disable the energy harvesting, the time offset field and the duration field do not need to be determined, provided that a length of the sent data packet #1 is assigned with a quantity of bytes occupied by the first data packet.

S550': The physical layer performs data transmission based on the EH identifier in the data packet #1.

Specifically, if the physical layer determines that the EH identifier of the data packet #1 is equal to 0, the physical layer keeps transmitting the data packet #1 in a data transmission mode.

It should be noted that, in the foregoing case 1 and case 2, a series of steps are performed after the control layer determines that the to-be-transmitted data queue includes the data packet #1. When there is no to-be-sent data packet in the to-be-transmitted data queue of the control layer, subsequent steps do not need to be performed. In addition, when the physical layer executes the energy harvesting mode after receiving the data packet #1, a data packet #2 is stored in a current data queue of the control layer. In this case, the control layer obtains an energy value #2 from the physical layer based on the data packet #2, where the energy value #2 identifies a current energy value of the first component at the current physical layer. The control layer further determines, based on the energy value #2, whether to enable or disable the energy harvesting, and further configure an energy harvesting identifier, a time offset, and duration in a frame structure for sending the data packet #2. The physical layer does not need to perform a slot configured in the frame structure of the data #2 after the first switching or the second switching performed by the data packet #1 or both are completed, and may further directly execute the data transmission mode or the energy harvesting mode based on the slot configured in the frame structure of the data packet #2.

According to the method shown in FIG. 5, and the case 1 and the case 2 in FIG. 5, the control layer obtains the current energy value #1 of the physical layer, and determines, based on the first threshold, whether to enable the energy harvesting or disable the energy harvesting, which is described in detail. It can be learned that in the method shown in FIG. 5, when determining that the current data queue includes the first data packet, the control layer obtains the energy value #1 of the first component from the physical layer, further determines whether to enable the energy harvesting or disable the energy harvesting, and configures information such as the corresponding energy harvesting EH identifier, a time offset, and duration in the frame structure of the sent data packet #1. The energy harvesting slot can be directly disabled at any time, and the slot occupied by data transmission and the slot occupied by the energy harvesting at the physical layer can be adjusted in real time based on a current situation. This greatly improves air interface resource utilization and saves a large number of slot resources.

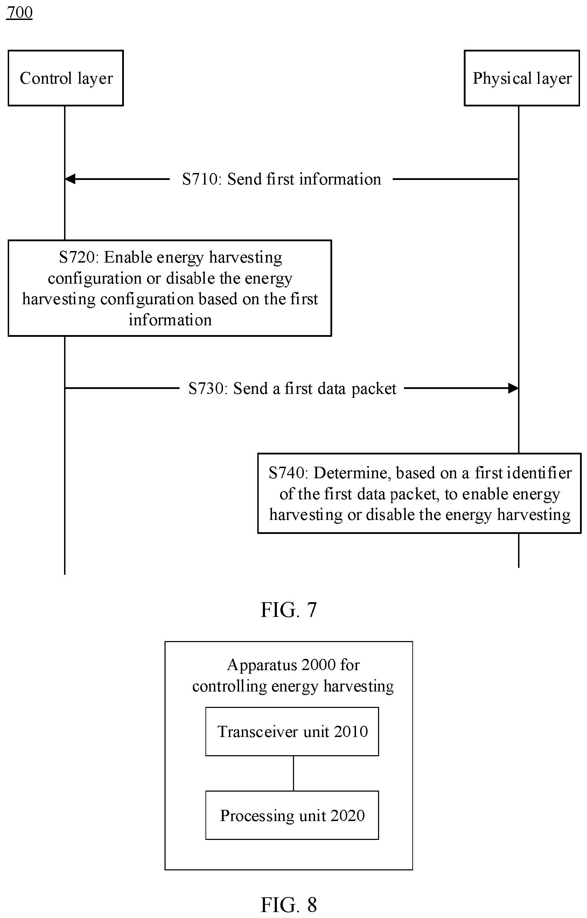

FIG. 7 is a schematic flowchart of a method 700 for controlling energy harvesting according to an embodiment of this application.

S710: A control layer receives first information from a physical layer.

Correspondingly, the physical layer sends the first information to the control layer.

The first information is used by the control layer to determine whether the energy harvesting needs to be enabled or the energy harvesting needs to be disabled.

It should be understood that the first information may be information sent by an interrupt service routine (interrupt service routine, ISR). When the control layer is processing a specific event, the physical layer sends the first information to the control layer, and requests the control layer to quickly process an event in the first information.

S720: The control layer determines, based on the first information, to enable the energy harvesting or disable the energy harvesting.

Specifically, after receiving the first information from the physical layer, the control layer determines, based on the first information, to enable the energy harvesting or disable the energy harvesting.

In a possible implementation, the first information includes a value relationship determined by the physical layer based on a first energy value and a first threshold, that is, the first information includes a relationship between the first energy value and the first threshold, indicating that the first energy value is less than or equal to the first threshold, or the first energy value is greater than the first threshold. The control layer determines, based on the value relationship between the first energy value and the first threshold in the first information sent by the physical layer, whether to enable the energy harvesting or disable the energy harvesting.

In another possible implementation, the first information includes the first energy value, and the control layer determines, based on the first energy value in the first information sent by the physical layer and the first threshold, whether to enable the energy harvesting or disable the energy harvesting.

S730: The control layer sends a first data packet to the physical layer.

Correspondingly, the physical layer receives the first data packet from the control layer.

Specifically, after determining, based on the first information, to enable the energy harvesting or disable the energy harvesting, the control layer configures a first identifier included in a frame header of the first data packet, and sends the first data packet to the physical layer.

In a possible implementation, the control layer determines, based on the first information, to enable the energy harvesting, and the first identifier included in the frame header of the first data packet sent by the control layer to the physical layer indicates the physical layer to enable the energy harvesting.

Optionally, when the first identifier indicates the physical layer to enable the energy harvesting, the first data packet sent by the control layer may further include a first field and a second field, where the first field indicates a start moment of the energy harvesting, and the second field indicates duration of the energy harvesting.

It should be understood that the first field may further indicate duration from a start moment of scheduling (or referred to as transmission) of the first data packet to a start moment of the energy harvesting; and the second field may further indicate the start moment of the energy harvesting and an end moment of the energy harvesting.

It should be further understood that step S730 is similar to S420 in FIG. 4. For a detailed example, refer to the description in S420. Details are not described herein again.

S740: The physical layer determines, based on the first identifier of the first data packet, to enable the energy harvesting or disable the energy harvesting.

Specifically, after receiving the first data packet sent by the control layer, the physical layer determines, based on the first identifier included in the frame header of the first data packet, to enable the energy harvesting or disable the energy harvesting.

In a possible implementation, when the first identifier indicates the physical layer to enable the energy harvesting, the physical layer performs first switching and/or second switching based on the first field and the second field in the first data packet. The first switching means that the physical layer switches from a data transmission mode to an energy harvesting mode, and the second switching means that the physical layer switches from the energy harvesting mode to the data transmission mode.

Step S740 is similar to steps S550 and S550' in FIG. 5. For detailed descriptions, refer to the foregoing descriptions. Details are not described herein again.

Based on the method described in FIG. 7, the physical layer may send a value determining result between the first energy value and the first threshold to the control layer, and then the control layer further determines whether to enable the energy harvesting or disable the energy harvesting; or the physical layer may send the first energy value to the control layer, and the control layer determines whether to enable the energy harvesting or disable the energy harvesting based on the first energy value and the first threshold. When the control layer determines to enable or disable the energy harvesting, the first identifier in the frame header of the first data packet sent to the physical layer further indicates the physical layer. It can be learned that an indication of enabling or disabling the energy harvesting is synchronized with data transmission, without needing excessive signaling exchange, saving a resource. In addition, the energy harvesting and data transmission may be adjusted in real time through data transmission based on a network environment, improving adaptability of the energy harvesting.

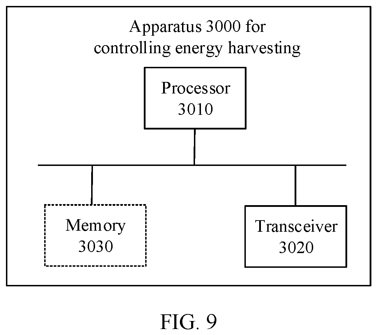

The foregoing describes in detail the embodiments of the methods for controlling energy harvesting in this application with reference to FIG. 1 to FIG. 7. The following describes in detail apparatus embodiments in this application with reference to FIG. 8 and FIG. 9. It should be understood that descriptions of the apparatus embodiments correspond to the descriptions of the method embodiments, and therefore for a part that is not described in detail, reference may be made to the foregoing method embodiments.

FIG. 8 is a block diagram of an apparatus for controlling energy harvesting according to an embodiment of this application. As shown in FIG. 8, the apparatus 2000 may include a transceiver unit 2010 and a processing unit 2020. The transceiver unit 2010 may communicate with an outside, and the processing unit 2020 is configured to process data. The transceiver unit 1210 may also be referred to as a communication interface or a transceiver unit.

In a possible design, the apparatus 2000 may implement the steps or procedures performed by the sending device in the foregoing method embodiments. The processing unit 2020 is configured to perform an operation related to processing of the sending device in the foregoing method embodiments. The transceiver unit 2010 is configured to perform an operation related to sending and receiving of the sending device in the foregoing method embodiments.

In another possible design, the apparatus 2000 may implement the steps or procedures performed by the receiving device in the foregoing method embodiments. The transceiver unit 2010 is configured to perform an operation related to sending and receiving of the receiving device in the foregoing method embodiments. The processing unit 2020 is configured to perform an operation related to processing of the receiving device in the foregoing method embodiments.

It should be understood that the apparatus 2000 is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 2000 may be specifically the sending device in the foregoing embodiments, and may be configured to perform the procedures and/or steps corresponding to the sending device in the foregoing method embodiments. Alternatively, the apparatus 2000 may be specifically the receiving device in the foregoing embodiments, and may be configured to perform the procedures and/or steps corresponding to the receiving device in the foregoing method embodiments. To avoid repetition, details are not described herein again.

The apparatus 2000 in each of the foregoing solutions has a function of implementing the corresponding steps performed by the sending device in the foregoing method, or the apparatus 2000 in each of the foregoing solutions has a function of implementing the corresponding steps performed by the receiving device in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a sending and receiving operation and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 8 may be the receiving device or the sending device in the foregoing embodiments, or may be a chip or a chip system, for example, a system on chip (system on chip, SoC). The transceiver unit may be an input/output circuit or a communication interface. The processing unit is a processor a microprocessor or an integrated circuit integrated on the chip. This is not limited herein.

FIG. 9 shows an angle determining apparatus 3000 according to an embodiment of this application. As shown in FIG. 9, the apparatus 3000 includes a processor 3010 and a transceiver 3020. The processor 3010 and the transceiver 3020 communicate with each other through an internal connection path. The processor 3010 is configured to execute instructions, to control the transceiver 3020 to send a signal and/or receive a signal.

Optionally, the apparatus 3000 may further include a memory 3030. The memory 3030 communicates with the processor 3010 and the transceiver 3020 through an internal connection path. The memory 3030 is configured to store instructions, and the processor 3010 may execute the instructions stored in the memory 3030.

In a possible implementation, the apparatus 3000 is configured to implement the procedures and steps corresponding to the sending device in the foregoing method embodiments.

In another possible implementation, the apparatus 3000 is configured to implement procedures and steps corresponding to the receiving device in the foregoing method embodiments.

It should be understood that, the apparatus 3000 may be specifically the sending device or the receiving device in the foregoing embodiments, or may be a chip or a chip system. Correspondingly, the transceiver 3020 may be a transceiver circuit of the chip. This is not limited herein. Specifically, the apparatus 3000 may be configured to perform the steps and/or procedures corresponding to the sending device or the receiving device in the foregoing method embodiments.

Optionally, the memory 3030 may include a read-only memory and a random access memory, and provide an instruction and data to the processor. A part of the memory may further include a nonvolatile random access memory. For example, the memory may further store information of a device type. The processor 3010 may be configured to execute the instructions stored in the memory; and when the processor 3010 executes the instructions stored in the memory, the processor 3010 is configured to perform steps and/or procedures corresponding to the sending device or the receiving device in the foregoing method embodiments.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general purpose processor, a digital signal processor, an application-specific integrated circuit, a field programmable gate array or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code, and when the computer program code is run on a computer, the computer is enabled to perform the method shown in the foregoing embodiments.

According to the method provided in embodiments of this application, this application further provides a computer-readable medium. The computer-readable medium stores program code, and when the program code is run on a computer, the computer is enabled to perform the method in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for controlling energy harvesting, comprising:
generating a first data packet, wherein the first data packet is a to-be-transmitted data packet, a frame header of the first data packet comprises a first identifier, and the first identifier indicates a physical layer to enable energy harvesting or disable the energy harvesting; and
sending the first data packet.

2. The method according to claim 1, wherein the method further comprises:
obtaining a first energy value, wherein the first energy value is an energy value of a first component; and determining the first identifier based on the first energy value.

3. The method according to claim 1 or 2, wherein when the first identifier indicates the physical layer to enable the energy harvesting,
the first data packet comprises a first field and a second field, wherein the first field indicates a start moment of the energy harvesting, and the second field indicates duration of the energy harvesting or an end moment of the energy harvesting.

4. The method according to claim 3, wherein a length of the first data packet is a sum of a quantity of bytes occupied by the first data packet and a first quantity of bytes, and the first quantity of bytes is a quantity of bytes occupied by the first field and the second field.

5. The method according to any one of claims 1 to 4, wherein the determining the first identifier based on the first energy value comprises:
when the first energy value is greater than a first threshold, the first identifier indicates the physical layer to disable the energy harvesting; or
when the first energy value is less than or equal to the first threshold, the first identifier indicates the physical layer to enable the energy harvesting.

6. A method for controlling energy harvesting, comprising:
receiving a first data packet, wherein the first data packet is a to-be-transmitted data packet, a frame header of the first data packet comprises a first identifier, and the first identifier indicates a physical layer to enable energy harvesting or disable the energy harvesting; and
enabling the energy harvesting or disabling the energy harvesting based on the first identifier.

7. The method according to claim 6, wherein the method further comprises:
sending a first energy value, wherein the first energy value is an energy value of a first component, and the first energy value is used to determine the first identifier.

8. The method according to claim 6 or 7, wherein when the first identifier indicates the physical layer to enable the energy harvesting,
the first data packet comprises a first field and a second field, wherein the first field indicates a start moment of the energy harvesting, and the second field indicates duration of the energy harvesting or an end moment of the energy harvesting.

9. The method according to claim 8, wherein a length of the first data packet is a sum of a quantity of bytes occupied by the first data packet and a first quantity of bytes, and the first quantity of bytes is a quantity of bytes occupied by the first field and the second field.

10. The method according to claim 8 or 9, wherein the method further comprises:
performing first switching and/or second switching based on the first identifier, the first field, and the second field, wherein the first switching means that the physical layer switches from a data transmission mode to an energy harvesting mode, the second switching means that the physical layer switches from the energy harvesting mode to the data transmission mode, the data transmission mode means that the physical layer transmits the first data packet, and the energy harvesting mode means that the physical layer harvests energy.

11. A method for controlling energy harvesting, comprising:
receiving a first data packet, wherein the first data packet is a to-be-transmitted data packet, a frame header of the first data packet comprises a first identifier, and the first identifier indicates a physical layer to enable energy harvesting or disable the energy harvesting; and
enabling the energy harvesting or disabling the energy harvesting based on the first identifier.

12. The method according to claim 11, wherein the method further comprises:
sending first information, wherein the first information is used to determine the first identifier, the first information is related to a first energy value, and the first energy value is an energy value of a first component.

13. The method according to claim 11 or 12, wherein when the first identifier indicates the physical layer to enable the energy harvesting,
the first data packet comprises a first field and a second field, wherein the first field indicates a start moment of the energy harvesting, and the second field indicates duration of the energy harvesting or an end moment of the energy harvesting.

14. The method according to claim 13, wherein a length of the first data packet is a sum of a quantity of bytes occupied by the first data packet and a first quantity of bytes, and the first quantity of bytes is a quantity of bytes occupied by the first field and the second field.

15. The method according to claim 13 or 14, wherein the method further comprises:
performing first switching and/or second switching based on the first identifier, the first field, and the second field, wherein the first switching means that the physical layer switches from a data transmission mode to an energy harvesting mode, the second switching means that the physical layer switches from the energy harvesting mode to the data transmission mode, the data transmission mode means that the physical layer transmits the first data packet, and the energy harvesting mode means that the physical layer harvests energy.

16. A method for controlling energy harvesting, comprising:
receiving first information, wherein the first information is used to determine the first identifier, the first information is related to a first energy value, and the first energy value is an energy value of a first component; and
sending a first data packet, wherein the first data packet is a to-be-transmitted data packet, a frame header of the first data packet comprises a first identifier, the first identifier indicates a physical layer to enable energy harvesting or disable the energy harvesting; and the first identifier is determined based on the first information.

17. The method according to claim 16, wherein when the first identifier indicates the physical layer to enable the energy harvesting,
the first data packet comprises a first field and a second field, wherein the first field indicates a start moment of the energy harvesting, and the second field indicates duration of the energy harvesting or an end moment of the energy harvesting.

18. The method according to claim 16 or 17, wherein a length of the first data packet is a sum of a quantity of bytes occupied by the first data packet and a first quantity of bytes, and the first quantity of bytes is a quantity of bytes occupied by the first field and the second field.

19. An apparatus for controlling energy harvesting, comprising:
a unit configured to implement the method according to any one of claims 1 to 5; or
a unit configured to implement the method according to any one of claims 6 to 10; or
a unit configured to implement the method according to any one of claims 11 to 15; or
a unit configured to perform the method according to any one of claims 15 to 18.

20. An apparatus for controlling energy harvesting, comprising a processor, wherein the processor is coupled to a memory; and the processor is configured to execute a computer program stored in the memory, to enable the apparatus to perform the method according to any one of claims 1 to 18.

21. A chip, comprising a processor, configured to invoke a computer program from a memory and run the computer program, to enable a communication apparatus on which the chip is installed to perform the method according to any one of claims 1 to 18.

22. A computer program, wherein when the computer program is executed by the apparatus, the method according to any one of claims 1 to 18 is implemented.

23. A computer-readable storage medium, wherein the computer-readable storage medium stores a computer program, and when the computer program is run, the computer is enabled to perform the method according to any one of claims 1 to 18.
